# FASCICULE DE BREVET EUROPEEN

(11) **EP 4 334 152 B1**
(45) Date de publication et mention de la délivrance du brevet: **30.04.2025**
(21) Numéro de dépôt: 22722507.5
(22) Date de dépôt: 12.04.2022
(51) Int. Cl.: B60K 11/08

(54) **VOLET EXTRUDE POUR DISPOSITIF D'OBTURATION D'ENTREE D'AIR DE FACE AVANT DE VEHICULE AUTOMOBILE**
EXTRUDIERTE KLAPPE FÜR EINE VORRICHTUNG ZUM ABSPERREN EINES LUFTEINLASSES EINER KRAFTFAHRZEUGVORDERSEITE
EXTRUDED FLAP FOR A DEVICE FOR SHUTTING OFF AN AIR INLET OF A MOTOR VEHICLE FRONT END

(30) Priorité: 03.05.2021 FR 2104654
(43) Date de publication de la demande: 13.03.2024
(73) Titulaire: VALEO SYSTEMES THERMIQUES, 78320 Le Mesnil Saint-Denis (FR)
(72) Inventeur: MITIDIERI, Enzo, 78322 Le Mesnil-Saint-Denis Cedex (FR); MARION, Laura, 78322 Le Mesnil-Saint-Denis Cedex (FR)
(74) Mandataire: Valeo Systèmes Thermiques
(86) Numéro de dépôt international: PCT/EP2022/059812
(87) Numéro de publication internationale: WO 2022/233548

(56) Documents cités:
- WO-A1-2011/009212
- WO-A1-2018/067288
- WO-A1-2019/166729
- DE-A1- 10 008 099
- DE-A1- 102017 119 098
- US-A1- 2014 045 418

## Description

La présente invention concerne un volet pour un dispositif d'obturation et plus précisément un dispositif d'obturation d'entrée d'air de face avant de véhicule automobile.

Les faces avant de véhicules automobiles sont généralement composées de deux entrées d'air principales dites voie haute et voie basse, séparées par une poutre parechoc. Derrière cette poutre parechoc sont généralement placés les échangeurs de chaleur du véhicule automobile, comme par exemple celui utilisé pour la climatisation de l'habitacle et/ou encore celui utilisé pour le refroidissement du moteur.

Il est également connu de disposer, dans le trajet d'air passant par les entrées d'air principales, plus généralement la voie basse, un cadre support comportant une multiplicité de volets montés pivotants autour d'axes parallèles et propres à prendre une multiplicité de positions angulaires différentes, comprises entre une position d'ouverture et une position d'obturation, sous l'action de moyens de commande appropriés.

On obtient ainsi un dispositif d'obturation s'apparentant à une jalousie qui permet d'ajuster le débit d'air traversant les entrées d'airs et arrivant aux échangeurs de chaleur. Il est ainsi possible d'optimiser l'efficacité de ces échangeurs de chaleur en fonction des besoins en faisant varier la quantité d'air qu'ils reçoivent. De plus, à grande vitesse, les volets en position d'obturation permettent de diminuer le coefficient de traînée du véhicule et ainsi améliorent l'aérodynamisme dudit véhicule.

Les volets de tels dispositifs d'obturation peuvent notamment comporter un corps de volet extrudé aux extrémités duquel sont disposés des embouts permettant la liaison avec le cadre support. Cependant, afin que ces embouts restent en place au sein du corps de volet ou alors afin d'éviter que les embouts ne détériorent le corps de volet lors de leur mise en place, des tolérances de fabrication réduites sont nécessaires. Cette qualité de réalisation est difficilement atteignable et très coûteuse étant données les matières et dimensions des pièces.

Un volet de ce type est par ailleurs montré dans le document DE102017119098A1.

Un des buts de la présente invention est donc de remédier au moins partiellement aux inconvénients de l'art antérieur en proposant un volet comportant une liaison améliorée entre le corps de volet et les embouts.

La présente invention concerne donc un volet pour dispositif d'obturation d'entrée d'air de face avant de véhicule automobile, ledit volet comportant un corps de volet de forme oblongue profilé, obtenu par extrusion et s'étendant le long de son axe de rotation, ledit corps de volet comportant une paroi avant destinée à être disposée en opposition à un flux d'air lorsque le volet est dans une position de fermeture et une paroi arrière, opposée à la paroi avant, destinée à être reliée à au moins un dispositif de retenue porté par le dispositif d'obturation, la paroi arrière comportant une gorge s'étendant concentriquement à l'axe de rotation du volet, les parois avant et arrière étant liées bords à bords et délimitant un creux interne, ledit volet comportant en outre à chacune des extrémités du corps de volet un embout d'extrémité, lesdits embouts comportant une partie interne insérée dans le creux du corps de volet et une partie externe dépassant dudit corps de volet, au moins un embout comportant un doigt d'accroche, ledit doigt d'accroche faisant saillie de l'embout le long de l'axe de rotation et venant s'insérer au sein de la gorge de la paroi arrière, ledit doigt d'accroche comportant au moins une dent destinée à venir se planter au sein de ladite gorge, ladite dent étant orientée de sorte à vernir s'opposer à l'extraction de l'embout du corps de volet.

Selon un aspect de l'invention, l'extrémité libre du doigt d'accroche comporte un chanfrein orienté de sorte à faciliter l'insertion dudit doigt d'accroche dans la gorge.

Selon un autre aspect de l'invention, le corps de volet comporte au sein de son creux une paroi centrale de renfort s'étendant le long de l'axe de rotation et reliant la face interne de la paroi interne à la face interne de la paroi externe, ladite paroi centrale séparant le canal central en deux, la partie interne de l'embout comportant une fente d'insertion de ladite paroi centrale.

Selon un autre aspect de l'invention, la paroi centrale est disposée à l'aplomb de la gorge de sorte à relier le fond de ladite gorge avec la paroi avant.

Selon un autre aspect de l'invention, la partie interne de l'embout comporte au moins un point d'appui sur chacune des faces internes des parois externes formant le corps de volet.

Selon un autre aspect de l'invention, la partie interne de l'embout a une section transversale de forme complémentaire à celle du creux du corps de volet.

Selon un autre aspect de l'invention, la partie interne de l'embout comporte des évidements non traversants et faisant face aux faces internes des parois externes à l'état monté dans le corps de volet.

Selon un autre aspect de l'invention, l'épaisseur des sections formant la partie interne de l'embout varie d'une valeur inférieure à 15% d'une section à l'autre.

Selon un autre aspect de l'invention, l'embout comporte entre sa partie interne et sa partie externe une collerette faisant saillie perpendiculairement à l'axe de rotation du volet, ladite collerette refermant l'extrémité du corps de volet.

Selon un autre aspect de l'invention, le volet comporte, à une première de ses extrémités, un embout comportant sur sa partie externe un axe de pivot concentrique avec l'axe de rotation et, à une deuxième extrémité, un embout comportant un axe de pivot concentrique avec l'axe de rotation et un bras de commande.

D'autres caractéristiques et avantages de l'invention apparaîtront plus clairement à la lecture de la description suivante, donnée à titre d'exemple illustratif et non limitatif, et des dessins annexés parmi lesquels :
[Fig 1] la figure 1 montre une représentation schématique en perspective de face d'un dispositif d'obturation en position d'obturation,
[Fig 2] la figure 2 montre une représentation schématique en perspective d'un élément de commande,
[Fig 3] la figure 3 montre une représentation schématique en perspective d'un volet,
[Fig 4] la figure 4 montre une représentation schématique en perspective éclatée d'une extrémité de volet,
[Fig 5] la figure 6 montre une représentation schématique en perspective d'un embout,
[Fig 6] la figure 6 montre une représentation schématique en perspective et en coupe longitudinale d'une extrémité de volet.

Les éléments identiques sur les différentes figures, portent les mêmes références.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations toujours en accord avec les revendications.

Dans la présente description on peut indexer certains éléments ou paramètres, comme par exemple premier élément ou deuxième élément ainsi que premier paramètre et deuxième paramètre ou encore premier critère et deuxième critère etc. Dans ce cas, il s'agit d'un simple indexage pour différencier et dénommer des éléments ou paramètres ou critères proches mais non identiques. Cette indexation n'implique pas une priorité d'un élément, paramètre ou critère par rapport à un autre. Cette indexation n'implique pas non plus un ordre dans le temps par exemple pour apprécier tels ou tels critères.

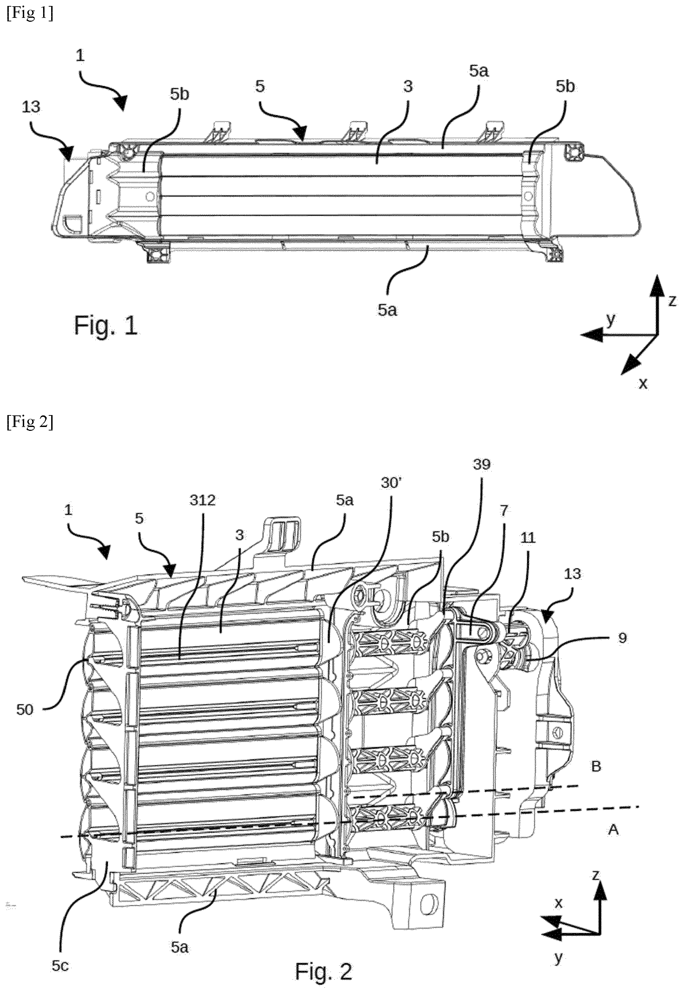

Sur les figures 1 et 2, nous utiliserons un trièdre XYZ afin de montrer l'angle de vue de chacune desdites figures les unes par rapport aux autres. Les axes de ce trièdre peuvent également correspondre aux différentes orientations du véhicule automobile. L'axe X peut ainsi correspondre à l'axe de la longueur du véhicule, l'axe Y à l'axe de sa largeur et l'axe Z à celui de sa hauteur.

La figure 1 montre une représentation schématique en perspective d'un dispositif d'obturation en position d'obturation. Cette figure 1 montre plus exactement la face externe dudit dispositif d'obturation 1, c'est-à-dire la face dirigée vers l'extérieur du véhicule automobile.

Ledit dispositif d'obturation 1 comporte un cadre support 5 comprenant notamment deux traverses longitudinales 5a, s'étendant parallèlement à l'axe Y du trièdre, et au moins deux montants latéraux 5b, s'étendant parallèlement à l'axe Z du trièdre, et reliant lesdites traverses longitudinales 5a. Avantageusement, le cadre support 5 est réalisé en matière plastique et les deux traverses longitudinales 5a et les au moins deux montants latéraux 5b sont obtenus par moulage par injection. Afin d'améliorer la rigidité dudit cadre support 5, ce dernier peut être moulé en une seule pièce.

Au sein dudit cadre support 5 est installé un ou plusieurs volets 3. Lorsqu'il y a une pluralité de volets 3, ces derniers forment des rangs de volets 3 parallèles entre eux et qui forment un ensemble de volets 3. Dans l'exemple illustré à la figure 1, le dispositif d'obturation 1 comporte un ensemble de volets 3. Un module de commande 13 est placé à une des extrémités de l'ensemble de volets 3 de sorte à permettre la rotation synchrone desdits volets 3 autour d'un axe de pivotement A. Cette rotation est effectuée entre une position d'ouverture (non représentée), où les volets 3 sont disposés de sorte qu'un flux d'air puisse traverser le dispositif d'obturation 1, notamment à l'intérieur du cadre support 5, et une position de fermeture, illustrée à la figure 1, où les volets 3 sont agencés de sorte qu'un flux d'air ne puisse pas traverser le dispositif d'obturation 1.

Dans l'exemple présenté à la figure 1, le module de commande 13 est disposé au niveau d'un montant latéral 5b. Il est néanmoins tout à fait possible d'imaginer que le module de commande 13 soit disposé dans l'ouverture du cadre support 5 reliant les traverses longitudinales 5a et que le dispositif d'obturation 1 comporte un ensemble de volets 3 de part et d'autre du module de commande 13.

Comme le montre la figure 2, l'élément de commande 13 comporte notamment une bielle 7. Les volets 3 comportent un bras de commande 39, perpendiculaire à leur axe de pivotement A et portant un goujon de liaison selon un axe de liaison B. Le goujon de liaison permet la liaison entre le volet 3 et la bielle 7 L'axe de pivotement A et les axes de liaison B sont non confondus et tous deux parallèles à l'axe Y du trièdre.

Le module de commande 13 comporte également un actionneur 9. L'actionneur 9 peut être électrique, comme par exemple un moteur électrique ou encore pneumatique, comme par exemple un vérin pneumatique. Ledit actionneur 9 applique à la bielle 7 un mouvement de translation selon l'axe Z du trièdre, par pivotement d'un levier 11.

Les volets 3 peuvent pivoter chacun autour d'un axe de pivotement A défini par leur liaison avec le cadre support 5. Les goujons de liaison entre les volets 3 et la bielle 7 de commande sont excentrés par rapport aux axes de pivotement A de sorte qu'un mouvement de translation parallèlement à l'axe Z du trièdre de la bielle 7 de commande, sous l'action de l'actionneur 9, entraîne le pivotement des volets 3 autour de leurs axes de pivotement A respectifs et donc le passage desdits volets 3 d'une position à une autre. Les volets 3 étant reliés à la même bielle 7, le passage d'une position d'ouverture à une position de fermeture est synchrone pour tous lesdits volets 3.

Le cadre support 5 comporte également un ou plusieurs dispositifs de retenue 5c. Ces dispositifs de retenue 5c sont plus particulièrement disposé dans l'ouverture du cadre support 5 et relient les traverses longitudinales 5a. Les dispositifs de retenue 5c sont plus particulièrement disposés en arrière des volets 3. Les dispositifs de retenue 5c comportent également des organes de retenue 50 venant s'insérer dans une gorge 312 ménagée dans les volets 3 concentriquement à leurs axes de rotation A. Ces dispositifs de retenue 5c permettent aux volets 3 d'avoir un point d'appui afin de conserver une forme rectiligne et de ne pas ployer sous leur propre poids notamment s'ils sont de grande longueur.

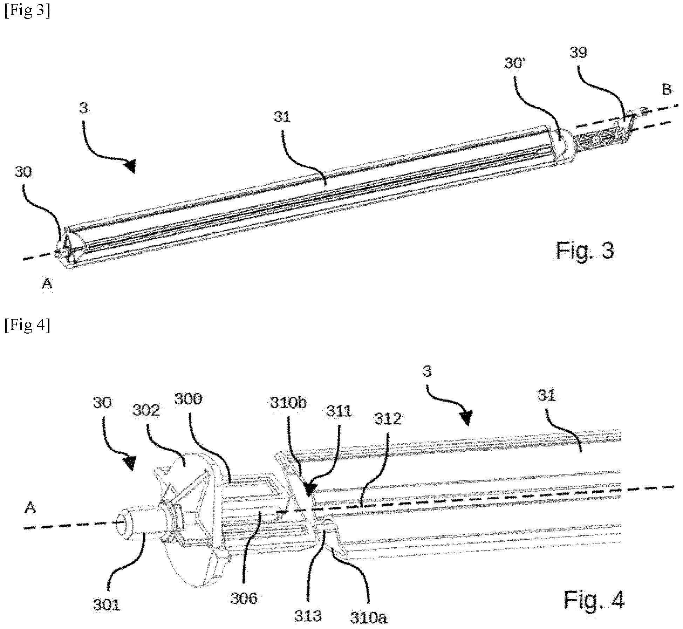

Comme le montre la figure 3, un volet 3 comporte un corps de volet 31 de forme oblongue profilée, obtenue par extrusion et s'étendant le long de son axe de rotation A. La section transversale du corps de volet 31 peut plus particulièrement avoir un profil sensiblement ovale (voir figure 4).

A chaque extrémité du corps de volet 31 sont disposés des embouts 30, 30'. Dans le cas présent, on parle des extrémités selon la direction longitudinale du corps de volet 31. Ces embouts 30, 30' permettent notamment de refermer le corps de volet 31 obtenu par extrusion et permettent également la liaison du volet 3 avec le cadre support 5 et le module de commande 13. L'embout 30' destiné à être relié au module de commande 13 comporte notamment le bras de commande 39 permettant la liaison avec la bielle 7 (voir figures 2 et 3).

Comme le montre la figure 4, le corps de volet 31 comporte une paroi avant 310a et une paroi arrière 310b liées bords à bords et délimitant un creux 311 interne. La paroi avant 310a est notamment destinée à être disposée en opposition à un flux d'air lorsque le volet 3 est dans une position de fermeture comme illustré à la figure 1 et 2. La paroi arrière 310b, opposée à la paroi avant 310a, comporte quant à elle la gorge 312 permettant la liaison avec au moins un dispositif de retenue 5c porté par le dispositif d'obturation 1 (visible à la figure 2). Ces deux parois externes 310 forment plus exactement la structure externe du corps de volet 31. Le creux 311 interne s'étend sur toute la longueur du corps de volet 31 du fait que ce dernier est réalisé par extrusion.

Les embouts 30, 30' comportent une partie interne 300 insérée dans le creux 311 du corps de volet 31 et une partie externe 301 dépassant dudit corps de volet 31. Les embouts 30, 30' peut également comporter, entre leur partie interne 300 et leur partie externe 301, une collerette 302 faisant saillie perpendiculairement à l'axe de rotation A du volet 3. Cette collerette 302 referme notamment l'extrémité du corps de volet 31. La collerette 302 permet également de protéger le cadre support 5 et le module de commande 13 de l'eau ou de la poussière qui pourrait arriver au niveau du corps de volet 31.

A une première extrémité du corps de volet 31 illustrée à la figure 4, le volet 3 comporte notamment un embout 30 comportant sur sa partie externe 301 un axe de pivot concentrique avec l'axe de rotation A destiné à coopérer avec un palier porté par le cadre support 5. A une deuxième extrémité du corps de volet 31 (visible sur la figure 2), le volet 3 comporte un autre embout 30' comportant un axe de pivot concentrique avec l'axe de rotation A, destiné à coopérer avec un palier porté le module de commande 13, et le bras de commande 39. Les embouts 30, 30' sont de préférence réalisés en matière plastique par moulage par injection.

Comme le montrent plus en détail les figures 4 à 6, la partie interne 300 de l'embout 30 comporte également un doigt d'accroche 306. Ce doigt d'accroche 306 fait saillie de l'embout 30, 30' le long de l'axe de rotation A et vient s'insérer au sein de la gorge 312 de la paroi arrière 310b. Le doigt d'accroche 306 comporte au moins une dent 307 destinée à venir au contact de ladite gorge 312. Cette dent 307 est notamment orientée de sorte à vernir s'opposer à l'extraction de l'embout 30, 30' du corps de volet 31. Pour cela, la dent 307 peut comporter un méplat orienté perpendiculairement à la paroi arrière 310b et faisant face à la partie externe 301. Il également possible d'imaginer que la paroi arrière 310b comporte un bourrelet ou un orifice contre lequel vient buter la dent 307 lorsque l'embout 30, 30' est monté sur le corps de volet 31. Le doigt d'accroche 30 peut notamment venir de matière avec l'embout 30. Lorsque la partie interne 300 de l'embout 30 est insérée dans le creux 311 du corps de volet 31, le doigt d'accroche 306 se déforme lors de son entrée dans la gorge 312 pour permettre une insertion aisée Lorsqu'une force d'arrachage est appliquée sur l'embout 30 afin par exemple de le faire ressortir du corps de volet 31, la dent 306 vient en accroche de la paroi arrière 310b au sein de la gorge 312, maintenant l'embout 30 au sein du corps de volet 31. L'extrémité libre du doigt d'accroche 306 peut également comporter un chanfrein 308 orienté de sorte à faciliter l'insertion dudit doigt d'accroche 306 dans la gorge 312 lors du montage du volet 3.

Ce doigt d'accroche 306 permet une bonne liaison entre l'embout 30 et le corps de volet 31. Cela permet de sécuriser l'embout 30 au sein du creux 311 du corps de volet 31 et limite les risques que ce dernier se détache. De plus, le doigt d'accroche, grâce à sa déformation lors du montage, permet des tolérances de fabrication plus importantes entre l'embout 30 et le corps de volet 31 et une insertion aisée de l'embout 30 au sein dit corps de volet 31.

La partie interne 300 de l'embout 30 peut également comporter des évidements 304 non traversants et faisant face aux faces internes des parois externes 310 à l'état monté dans le corps de volet 31. Ces évidements permettent notamment de réduire la quantité de matière constituant l'embout 30 et ainsi permet de réduire son poids. Les sections formant la partie interne 300 de l'embout 30 peuvent notamment varier d'une épaisseur d'une valeur inférieure à 15% d'une section à l'autre. Cette épaisseur relativement constante des sections de la partie interne 300 permet également à l'embout 30 d'avoir une inertie thermique relativement uniforme.

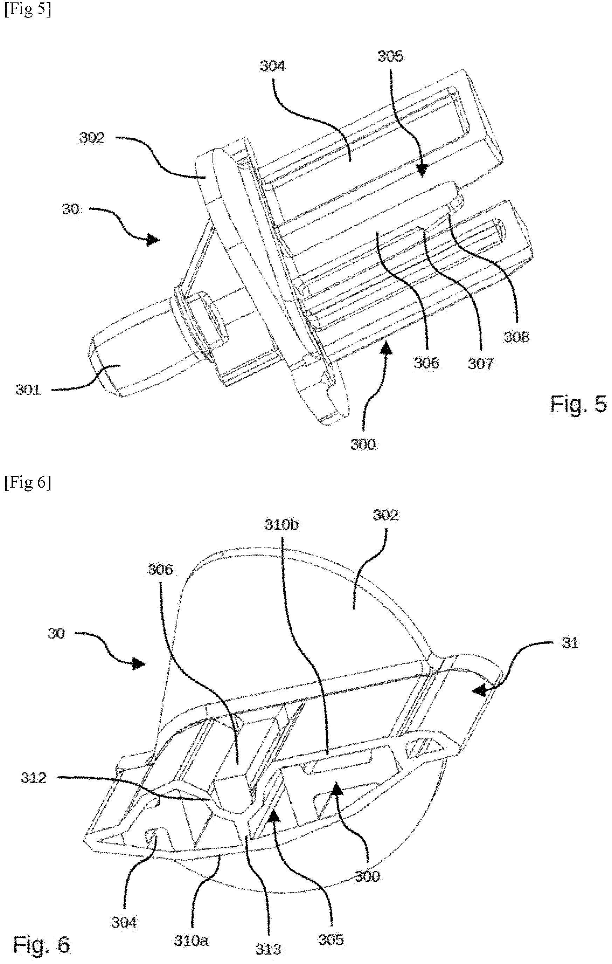

Le creux 311 dans lequel est inséré la partie interne 300 de l'embout 30, peut également comporter une paroi centrale 313 de renfort s'étendant le long de l'axe de rotation A, comme illustré sur les figures 4 et 6. Cette paroi centrale 313 sépare le canal central du creux 311 en deux. La paroi centrale 313 permet également de rigidifier le corps de volet 31 et notamment de maintenir l'écart entre les parois externes 310. Pour cela, cette paroi centrale 313 relie plus particulièrement la face interne de la paroi interne 310b à la face interne de la paroi externe 310a. Plus précisément, la paroi centrale 313 peut être disposée à l'aplomb de la gorge 312 de sorte à relier le fond de ladite gorge 312 avec la paroi avant 310a.

Comme le montre les figures 5 et 6, la partie interne 300 de l'embout 30 peut notamment comporter une fente d'insertion 305 de ladite paroi centrale 313 afin de permettre l'insertion de la partie interne 300 dans l'orifice central du corps de volet 31. Le doigt d'accroche 306 peut notamment être disposé au sein de cette fente d'insertion 305 lorsque la paroi centrale 313 est disposée à l'aplomb de la gorge 312.

Selon la figure 6, la partie interne 300 de l'embout 30 peut comporter au moins un point d'appui sur chacune des faces internes des parois externes 310 formant le corps de volet 31. Cela permet notamment à la partie interne 300 et plus largement à l'embout 30 de n'avoir qu'un seul degré de liberté le long de l'axe de rotation A. Cela permet notamment une bonne solidarisation entre le corps de volet 31 et l'embout 30. Afin de renforcer cette solidarisation et limiter le plus possible les mouvements de l'embout 30 au sein du corps de volet 31, la partie interne 300 de l'embout 30 peut notamment avoir une section transversale de forme complémentaire à celle du creux 311 du corps de volet 31.

Dans l'exemple illustré aux figures 4 à 6, seul l'embout 30 venant s'insérer dans la première extrémité du corps de volet 31 est représenté et décrit. Cependant, il est tout à fait possible d'imaginer que la partie interne 300 de l'un ou l'autre ou encore des deux embouts 30, 30' soit telle que décrite précédemment.

Ainsi, on voit bien que de par la présence du doigt d'accroche 306 venant au s'accrocher à la paroi arrière 310b du volet 3 dans la gorge 306, une bonne liaison entre l'embout 30 et le corps de volet 31 est possible. Cela permet de sécuriser l'embout 30 au sein du creux 311 du corps de volet 31 et limite les risques que ce dernier se détache. De plus le doigt d'accroche 306, grâce à sa déformation, permet des tolérances de fabrication plus importantes entre l'embout 30 et le corps de volet 31 et une insertion aisée de l'embout 30 au sein dit corps de volet 31.

## Revendications

1. Volet (3) pour dispositif d'obturation (1) d'entrée d'air de face avant de véhicule automobile, ledit volet (3) comportant un corps de volet (31) de forme oblongue profilé, obtenu par extrusion et s'étendant le long de son axe de rotation (A), ledit corps de volet (31) comportant une paroi avant (310a) destinée à être disposée en opposition à un flux d'air lorsque le volet (3) est dans une position de fermeture et une paroi arrière (310b), opposée à la paroi avant (310a), destinée à être reliée à au moins un dispositif de retenue (5c) porté par le dispositif d'obturation (1), la paroi arrière (310b) comportant une gorge (312) s'étendant concentriquement à l'axe de rotation (A) du volet (3), les parois avant (310a) et arrière (310b) étant liées bords à bords et délimitant un creux (311) interne, ledit volet (3) comportant en outre à chacune des extrémités du corps de volet (31) un embout d'extrémité (30, 30'), lesdits embouts (30, 30') comportant une partie interne (300) insérée dans le creux (311) du corps de volet (31) et une partie externe (301) dépassant dudit corps de volet (31), et au moins un embout (30, 30') comporte un doigt d'accroche (306), ledit doigt d'accroche (306) faisant saillie de l'embout (30, 30') le long de l'axe de rotation (A) et venant s'insérer au sein de la gorge (312) de la paroi arrière (310b), ledit doigt d'accroche (306) comportant au moins une dent (307) destinée à venir se planter au sein de ladite gorge (312), ladite dent (307) étant orientée de sorte à vernir s'opposer à l'extraction de l'embout (30, 30') du corps de volet (31).

2. Volet (3) selon la revendication précédente, **caractérisé en ce que** l'extrémité libre du doigt d'accroche (306) comporte un chanfrein (308) orienté de sorte à faciliter l'insertion dudit doigt d'accroche (306) dans la gorge (312).

3. Volet (3) selon l'une quelconque des revendications précédentes,
**caractérisé en ce que** le corps de volet (31) comporte au sein de son creux (311) une paroi centrale (313) de renfort s'étendant le long de l'axe de rotation (A) et reliant la face interne de la paroi interne (310b) à la face interne de la paroi externe (310a), ladite paroi centrale (313) séparant le canal central en deux, la partie interne (300) de l'embout (30, 30') comportant une fente d'insertion (305) de ladite paroi centrale (313).

4. Volet (3) selon la revendication précédente, **caractérisé en ce que** la paroi centrale (313) est disposée à l'aplomb de la gorge (312) de sorte à relier le fond de ladite gorge (312) avec la paroi avant (310a).

5. Volet (3) selon l'une quelconque des revendications précédentes,
**caractérisé en ce que** la partie interne (300) de l'embout (30, 30') comporte au moins un point d'appui sur chacune des faces internes des parois externes (310) formant le corps de volet (31).

6. Volet (3) selon la revendication précédente, **caractérisé en ce que** la partie interne (300) de l'embout (30, 30') a une section transversale de forme complémentaire à celle du creux (311) du corps de volet (31).

7. Volet (3) selon l'une quelconque des revendications précédentes,
**caractérisé en ce que** la partie interne (300) de l'embout (30, 30') comporte des évidements (304) non traversants et faisant face aux faces internes des parois externes (310) à l'état monté dans le corps de volet (31).

8. Volet (3) selon la revendication précédente, **caractérisé en ce que** l'épaisseur des sections formant la partie interne (300) de l'embout (30, 30') varie d'une valeur inférieure à 15% d'une section à l'autre.

9. Volet (3) selon l'une quelconque des revendications précédentes,
**caractérisé en ce que** l'embout (30, 30') comporte entre sa partie interne (300) et sa partie externe (301) une collerette (302) faisant saillie perpendiculairement à l'axe de rotation (A) du volet (3), ladite collerette (302) refermant l'extrémité du corps de volet (31).

10. Volet (3) selon l'une quelconque des revendications précédentes,
**caractérisé en ce qu'**il comporte, à une première de ses extrémités, un embout (30) comportant sur sa partie externe (301) un axe de pivot concentrique avec l'axe de rotation (A) et, à une deuxième extrémité, un embout (30') comportant un axe de pivot (301) concentrique avec l'axe de rotation (A) et un bras de commande (39).

## Patentansprüche

1. Klappe (3) für eine Vorrichtung (1) zum Absperren eines Lufteinlasses einer Kraftfahrzeugvorderseite, wobei die Klappe (3) einen Klappenkörper (31) mit profilierter länglicher Form umfasst, der durch Extrusion erhalten wird und sich entlang seiner Drehachse (A) erstreckt, wobei der Klappenkörper (31) eine Vorderwand (310a), die dazu bestimmt ist, zu einem Luftstrom entgegengesetzt angeordnet zu sein, wenn sich die Klappe (3) in einer Schließstellung befindet, und eine zu der Vorderwand (310a) entgegengesetzte Rückwand (310b), die dazu bestimmt ist, mit mindestens einer Haltevorrichtung (5c), die von der Absperrvorrichtung (1) getragen wird, verbunden zu sein, umfasst, wobei die Rückwand (310b) eine Nut (312) umfasst, die sich konzentrisch zu der Drehachse (A) der Klappe (3) erstreckt, wobei die Vorderwand (310a) und die Rückwand (310b) an ihren Kanten verbunden sind und einen Innenhohlraum (311) begrenzen, wobei die Klappe (3) ferner an jedem der Enden des Klappenkörpers (31) ein Endstück (30, 30') umfasst, wobei die Stücke (30, 30') einen Innenabschnitt (300), der in den Hohlraum (311) des Klappenkörpers (31) eingefügt ist, und einen Außenabschnitt (301), der von dem Klappenkörper (31) vorsteht, umfassen, und mindestens ein Stück (30, 30') umfasst einen Einhakfinger (306), wobei der Einhakfinger (306) entlang der Drehachse (A) von dem Stück (30, 30') vorspringt und sich innerhalb der Nut (312) der Rückwand (310b) einfügt, wobei der Einhakfinger (306) mindestens einen Zahn (307) umfasst, der dazu bestimmt ist, innerhalb der Nut (312) zu liegen zu kommen, wobei der Zahn (307) so ausgerichtet ist, dass er dem Herausziehen des Stücks (30, 30') aus dem Klappenkörper (31) entgegenwirkt.

2. Klappe (3) nach dem vorhergehenden Anspruch, **dadurch gekennzeichnet, dass** das freie Ende des Einhakfingers (306) eine Abschrägung (308) umfasst, die so ausgerichtet ist, dass sie das Einfügen des Einhakfingers (306) in die Nut (312) erleichtert.

3. Klappe (3) nach einem der vorhergehenden Ansprüche, **dadurch gekennzeichnet, dass** der Klappenkörper (31) innerhalb seines Hohlraums (311) eine verstärkende Mittelwand (313) umfasst, die sich entlang der Drehachse (A) erstreckt und die Innenfläche der Innenwand (310b) mit der Innenfläche der Außenwand (310a) verbindet, wobei die Mittelwand (313) den Mittelkanal in zwei teilt, wobei der Innenabschnitt (300) des Stücks (30, 30') einen Spalt (305) zum Einfügen der Mittelwand (313) umfasst.

4. Klappe (3) nach dem vorhergehenden Anspruch, **dadurch gekennzeichnet, dass** die Mittelwand (313) senkrecht unter der Nut (312) angeordnet ist, sodass sie den Boden der Nut (312) mit der Vorderwand (310a) verbindet.

5. Klappe (3) nach einem der vorhergehenden Ansprüche, **dadurch gekennzeichnet, dass** der Innenabschnitt (300) des Stücks (30, 30') an jeder der Innenflächen der Außenwände (310), die den Klappenkörper (31) bilden, mindestens einen Anlagepunkt umfasst.

6. Klappe (3) nach dem vorhergehenden Anspruch, **dadurch gekennzeichnet, dass** der Innenabschnitt (300) des Stücks (30, 30') einen Querschnitt aufweist, dessen Form zu derjenigen des Hohlraums (311) des Klappenkörpers (31) komplementär ist.

7. Klappe (3) nach einem der vorhergehenden Ansprüche, **dadurch gekennzeichnet, dass** der Innenabschnitt (300) des Stücks (30, 30') Aussparungen (304) umfasst, die nicht durchgehend sind und im in dem Klappenkörper (31) montierten Zustand den Innenflächen der Außenwände (310) gegenüberliegen.

8. Klappe (3) nach dem vorhergehenden Anspruch, **dadurch gekennzeichnet, dass** die Dicke der Teilabschnitte, die den Innenabschnitt (300) des Stücks (30, 30') bilden, von einem Teilabschnitt zum nächsten um weniger als 15 % variiert.

9. Klappe (3) nach einem der vorhergehenden Ansprüche, **dadurch gekennzeichnet, dass** das Stück (30, 30') zwischen seinem Innenabschnitt (300) und seinem Außenabschnitt (301) einen Kragen (302) umfasst, der von der Drehachse (A) der Klappe (3) senkrecht vorspringt, wobei der Kragen (302) das Ende des Klappenkörpers (31) verschließt.

10. Klappe (3) nach einem der vorhergehenden Ansprüche, **dadurch gekennzeichnet, dass** sie an einem ersten ihrer Enden ein Stück (30), das an seinem Außenabschnitt (301) eine zu der Drehachse (A) konzentrische Schwenkachse umfasst, und an einem zweiten Ende ein Stück (30'), das eine zu der Drehachse (A) konzentrische Schwenkachse (301) und einen Steuerarm (39) umfasst, umfasst.

## Claims

1. Flap (3) for a device (1) for shutting off an air inlet of a motor vehicle front end, said flap (3) comprising a profiled flap body (31) that has an oblong shape, is obtained by extrusion and extends along its axis of rotation (A), said flap body (31) comprising a front wall (310a), which is intended to be arranged in opposition to an air flow when the flap (3) is in a closed position, and a rear wall (310b), which is opposite the front wall (310a) and is intended to be connected to at least one retaining device (5c) borne by the shut-off device (1), the rear wall (310b) comprising a groove (312) extending concentrically to the axis of rotation (A) of the flap (3), the front wall (310a) and rear wall (310b) being connected edge to edge and delimiting an inner cavity (311), said flap (3) also comprising an end piece (30, 30') at each of the ends of the flap body (31), said end pieces (30, 30') comprising an inner portion (300) inserted into the cavity (311) in the flap body (31) and an outer portion (301) that extends beyond said flap body (31), and at least one end piece (30, 30') comprises a hooking finger (306), said hooking finger (306) protruding from the end piece (30, 30') along the axis of rotation (A) and being inserted within the groove (312) in the rear wall (310b), said hooking finger (306) comprising at least one tooth (307) that is intended to be embedded within said groove (312), said tooth (307) being oriented so as to prevent the end piece (30, 30') from being removed from the flap body (31).

2. Flap (3) according to the preceding claim, **characterized in that** the free end of the hooking finger (306) comprises a chamfer (308) that is oriented so as to make it easier for said hooking finger (306) to be inserted into the groove (312).

3. Flap (3) according to either one of the preceding claims, **characterized in that** the flap body (31) comprises, within its cavity (311), a central reinforcing wall (313) extending along the axis of rotation (A) and connecting the inner face of the inner wall (310b) to the inner face of the outer wall (310a), said central wall (313) dividing the central channel in two, the inner portion (300) of the end piece (30, 30') comprising a slot (305) for the insertion of said central wall (313).

4. Flap (3) according to the preceding claim, **characterized in that** the central wall (313) is arranged in vertical alignment with the groove (312) so as to connect the bottom of said groove (312) to the front wall (310a).

5. Flap (3) according to any one of the preceding claims, **characterized in that** the inner portion (300) of the end piece (30, 30') comprises at least one bearing point on each of the inner faces of the outer walls (310) forming the flap body (31).

6. Flap (3) according to the preceding claim, **characterized in that** the inner portion (300) of the end piece (30, 30') has a cross section that is complementary in shape to that of the cavity (311) in the flap body (31).

7. Flap (3) according to any one of the preceding claims, **characterized in that** the inner portion (300) of the end piece (30, 30') comprises blind recesses (304) that face the inner faces of the outer walls (310) when mounted in the flap body (31).

8. Flap (3) according to the preceding claim, **characterized in that** the thickness of the sections forming the inner portion (300) of the end piece (30, 30') varies by a value of less than 15% from one section to another.

9. Flap (3) according to any one of the preceding claims, **characterized in that** the end piece (30, 30') comprises, between its inner portion (300) and its outer portion (301), a collar (302) protruding perpendicular to the axis of rotation (A) of the flap (3), said collar (302) closing off the end of the flap body (31).

10. Flap (3) according to any one of the preceding claims, **characterized in that** it comprises, at a first of its ends, an end piece (30) comprising, on its outer portion (301), a pivot pin, which is concentric with the axis of rotation (A), and, at a second end, an end piece (30') comprising a pivot pin (301), which is concentric with the axis of rotation (A), and a control arm (39).
